# EUROPEAN PATENT APPLICATION

(11) **EP 4 716 051 A2**
(43) Date of publication of application: **25.03.2026**
(21) Application number: 24799910.5
(22) Date of filing: 26.06.2024
(51) Int. Cl.: H02J 3/28

(54) **ENERGY STORAGE OPERATION MODE SWITCHING METHOD AND APPARATUS, AND STORAGE MEDIUM AND DEVICE**

(30) Priority: 30.04.2023 CN 202310482402; 29.04.2024 CN 202410536854
(71) Applicant: Shanghai Sigeyuan Intelligent Technology Co., Ltd., Shanghai 200000 (CN)
(72) Inventor: CHANG, Hao, Shanghai 200000 (CN); JIANG, Chao, Shanghai 200000 (CN); YANG, Weizhong, Shanghai 200000 (CN)
(74) Representative: Bayramoglu et al.
(86) International application number: PCT/CN2024/101766
(87) International publication number: WO 2024/227454

(57) **Abstract**

The present disclosure provides an energy storage operation mode switching method and apparatus, a storage medium, and a device, which relate to the technical field of power scheduling. The energy storage operation mode switching method includes: presetting a first load forecasting model; acquiring first user input information; inputting the first user input information into a model for learning, and generating a first user electricity consumption behavior model; inputting a forecasting result of the first user electricity consumption behavior model and a forecasting result of the first load forecasting model into the model for learning, and generating a second load forecasting model; and outputting an energy storage scheduling strategy according to a second load forecasting result. This application addresses the problems existing in the prior art. That is, the existing energy storage modes are limited, failing to offer a variety of application modes for users, thereby making it impossible to perform timely and effective mode switching in response to changes in application scenarios, resulting in suboptimal user experience. Meanwhile, there is a lack of convenient human-computer interaction methods, leading to delays in information interaction.

## Description

### TECHNICAL FIELD

The present disclosure relates to the technical field of power scheduling, and in particular to an energy storage operation mode switching method and apparatus, a storage medium, and a device.

### BACKGROUND TECHNOLOGY

With the development of social economy and the progress of science and technology, the problems of energy shortage and environmental pollution have attracted increasing attention from the public. To address these severe problems, efforts have been intensified in the research and development of renewable energy, and photovoltaic (PV) microgrids based on solar energy have gradually become a research direction for renewable energy.

A PV-storage system, also referred to as a solar PV energy storage power generation system, is a power generation system composed of PV equipment and energy storage equipment. The existing energy storage modes are limited, failing to offer a variety of application modes for users, thereby making it impossible to perform timely and effective mode switching in response to changes in application scenarios, resulting in suboptimal user experience. Meanwhile, there is a lack of convenient human-computer interaction methods, leading to delays in information interaction. Yet, no effective solutions have been proposed to address the aforementioned problems.

### CONTENT OF THE INVENTION

An objective of the present disclosure is to provide an energy storage operation mode switching method and apparatus, a storage medium, and a device, so as to address the aforementioned problems existing in the prior art.

The present disclosure adopts the following technical solutions. An energy storage operation mode switching method includes:
S101: presetting a first load forecasting model: receiving first data, where the first data includes a forecasted power of a PV system, forecasted power data of a load, actual sampled power data, daily electricity consumption schedule, meteorological data, forecasted electricity price data, state of charge (SOC) data of an energy storage system, a parameter of each aggregation unit of a power station, and a power distribution network parameter; inputting the first data into a neural network model for training to generate the first load forecasting model; and alternatively, extracting an entity from the first data, and constructing a knowledge graph according to a mapping relationship between the entity and the load to generate the first load forecasting model;
S102: acquiring first user input information, where the first user input information is input via a means including voice input, quick response (QR) code scanning, or text input;
S103: inputting the first user input information into a large language model (LLM) for learning, and generating a first user electricity consumption behavior model;
S104: inputting a forecasting result of the first user electricity consumption behavior model and a forecasting result of the first load forecasting model into the LLM for learning, and generating a second load forecasting model; and
S105: acquiring operational data of the PV system, inputting the operational data into the second load forecasting model to obtain a second load forecasting result, and outputting an energy storage scheduling strategy according to the second load forecasting result.

Preferably, the energy storage scheduling strategy includes:
a charging pile forecasting strategy, a heat pump forecasting strategy, an economy-priority forecasting strategy, and an off-grid-priority forecasting strategy.

According to an implementation of the present disclosure, a process of outputting the charging pile forecasting strategy according to the second load forecasting result includes:
acquiring data of a generated power of the PV system, the forecasted power of the PV system, a charging power of charging piles, a forecasted power of the charging piles, and the SOC of the energy storage system;
performing charging and discharging management according to a relationship among the generated power of the PV system, the forecasted power of the PV system, the charging power of the charging piles, the forecasted power of the charging piles, and the SOC of the energy storage system; and
when the generated power of the PV system is greater than the charging power of the charging piles and the SOC of the energy storage system is less than a preset value A:
   charging, by the PV system, the charging piles and the energy storage system during a peak electricity consumption period, and stopping charging of the energy storage system when the SOC of the energy storage system is greater than or equal to the preset value A; and
   charging, by the PV system, the charging piles during a flat electricity consumption period or a valley electricity consumption period, supplementing the energy storage system with an excess of the generated power of the PV system and a power drawn from a power grid, and stopping charging of the energy storage system when the SOC of the energy storage system is greater than or equal to the preset value A.

According to an implementation of the present disclosure, the data of the generated power of the PV system, the charging power of the charging piles, and the SOC of the energy storage system is acquired in real time through an energy controller; the generated power of the PV system is calculated as a total generated power of all PV units in a distribution transformer area; the charging power of the charging piles is calculated as a total charging power of all charging piles in the distribution transformer area; and the SOC of the energy storage system is calculated as an average value of the SOC of each battery pack in the distribution transformer area.

According to an implementation of the present disclosure, a process of outputting the heat pump forecasting strategy according to the second load forecasting result includes:
acquiring data of a generated power of the PV system, the forecasted power of the PV system, a charging power of a heat pump, a forecasted power of the heat pump, and the SOC of the energy storage system; and performing charging and discharging management according to a relationship among the generated power of the PV system, the forecasted power of the PV system, the charging power of the heat pump, the forecasted power of the heat pump, and the SOC of the energy storage system.

According to an implementation of the present disclosure, a process of outputting the economy-priority forecasting strategy according to the second load forecasting result includes:
calculating a peak-shaving cost of an energy storage-integrated distributed PV system, including: an opportunity cost of the distributed PV system, an electricity purchase cost during charging of the energy storage system, and an operation and maintenance cost of the energy storage system;
calculating a peak-shaving revenue of the energy storage-integrated distributed PV system, including: a peak-shaving compensation revenue and an electric energy revenue of the energy storage system;
constructing a model for analyzing an economic benefit of the energy storage-integrated distributed PV system participating in peak-shaving, and calculating the economic benefit of the energy storage-integrated distributed PV system participating in peak-shaving by maximizing an objective function of the model according to a model constraint; and
formulating a peak-shaving control strategy for the energy storage-integrated distributed PV system according to the peak-shaving cost, the peak-shaving revenue, and the economic benefit of the energy storage-integrated distributed PV system participating in peak-shaving.

In particular, the present disclosure further provides an energy storage operation mode switching apparatus, including:
a presetting module, configured to preset a first load forecasting model;
an input module, configured to acquire first user input information;
a first learning module, configured to input the first user input information into a LLM for learning and generate a first user electricity consumption behavior model;
a second learning module, configured to input a forecasting result of the first user electricity consumption behavior model and a forecasting result of the first load forecasting model into the LLM for learning and generate a second load forecasting model; and
an output module, configured to acquire operational data of a PV system, input the operational data into the second load forecasting model to obtain a second load forecasting result, and output an energy storage scheduling strategy according to the second load forecasting result.

According to an implementation of the present disclosure, the energy storage scheduling strategy includes:
a charging pile forecasting strategy, a heat pump forecasting strategy, an economy-priority forecasting strategy, and an off-grid-priority forecasting strategy.

According to an implementation of the present disclosure, a process of outputting the charging pile forecasting strategy according to the second load forecasting result includes:
acquiring data of a generated power of the PV system, the forecasted power of the PV system, a charging power of charging piles, a forecasted power of the charging piles, and the SOC of the energy storage system;
performing charging and discharging management according to a relationship among the generated power of the PV system, the forecasted power of the PV system, the charging power of the charging piles, the forecasted power of the charging piles, and the SOC of the energy storage system; and
when the generated power of the PV system is greater than the charging power of the charging piles and the SOC of the energy storage system is less than a preset value A:
   charging, by the PV system, the charging piles and the energy storage system during a peak electricity consumption period, and stopping charging of the energy storage system when the SOC of the energy storage system is greater than or equal to the preset value A; and
   charging, by the PV system, the charging piles during a flat electricity consumption period or a valley electricity consumption period, supplementing the energy storage system with an excess of the generated power of the PV system and a power drawn from a power grid, and stopping charging of the energy storage system when the SOC of the energy storage system is greater than or equal to the preset value A.

According to an implementation of the present disclosure, the data of the generated power of the PV system, the charging power of the charging piles, and the SOC of the energy storage system is acquired in real time through an energy controller; the generated power of the PV system is calculated as a total generated power of all PV units in a distribution transformer area; the charging power of the charging piles is calculated as a total charging power of all charging piles in the distribution transformer area; and the SOC of the energy storage system is calculated as an average value of the SOC of each battery pack in the distribution transformer area.

According to an implementation of the present disclosure, a process of outputting the heat pump forecasting strategy according to the second load forecasting result includes:
acquiring data of a generated power of the PV system, the forecasted power of the PV system, a charging power of a heat pump, a forecasted power of the heat pump, and the SOC of the energy storage system; and performing charging and discharging management according to a relationship among the generated power of the PV system, the forecasted power of the PV system, the charging power of the heat pump, the forecasted power of the heat pump, and the SOC of the energy storage system.

According to an implementation of the present disclosure, a process of outputting the economy-priority forecasting strategy according to the second load forecasting result includes:
calculating a peak-shaving cost of an energy storage-integrated distributed PV system, including: an opportunity cost of the distributed PV system, an electricity purchase cost during charging of the energy storage system, and an operation and maintenance cost of the energy storage system;
calculating a peak-shaving revenue of the energy storage-integrated distributed PV system, including: a peak-shaving compensation revenue and an electric energy revenue of the energy storage system;
constructing a model for analyzing an economic benefit of the energy storage-integrated distributed PV system participating in peak-shaving, and calculating the economic benefit of the energy storage-integrated distributed PV system participating in peak-shaving by maximizing an objective function of the model according to a model constraint; and
formulating a peak-shaving control strategy for the energy storage-integrated distributed PV system according to the peak-shaving cost, the peak-shaving revenue, and the economic benefit of the energy storage-integrated distributed PV system participating in peak-shaving.

To achieve the above objective, another aspect of the present disclosure provides a computer-readable storage medium.

The computer-readable storage medium according to the present disclosure is configured to store a computer program; and the computer program is configured to run to implement the energy storage operation mode switching method.

To achieve the above objective, another aspect of the present disclosure provides an electronic device.

The electronic device according to the present disclosure includes: a memory and a processor, where the memory is configured to store a computer program; and the processor is configured to run the computer program so as to implement the energy storage operation mode switching method.

The present disclosure has the following beneficial effects. In the embodiment of the present disclosure, a human-computer interaction method is adopted to generate the energy storage scheduling strategy. The first load forecasting model is preset. The first user input information is acquired, and input into the model for learning to generate the first user electricity consumption behavior model. The forecasting result of the first user electricity consumption behavior model and the forecasting result of the first load forecasting model are input into the model for learning to generate the second load forecasting model. The energy storage scheduling strategy is output according to the second load forecasting result. In this way, the purposes of convenient information interaction and energy storage scheduling strategy generation are achieved, achieving the technical effect of formulating different system performance maintenance strategies according to customer requirements. This further addresses the technical problems of the prior art. That is, the energy storage modes are limited, failing to offer a variety of application modes for users, thereby making it impossible to perform timely and effective mode switching in response to changes in application scenarios, resulting in suboptimal user experience. Meanwhile, there is a lack of convenient human-computer interaction methods, leading to delays in information interaction.

### DESCRIPTION OF THE DRAWINGS

FIG. 1 is a schematic flowchart of an energy storage operation mode switching method according to an embodiment of the present disclosure; and
FIG. 2 is a schematic structural diagram of an energy storage operation mode switching apparatus according to an embodiment of the present disclosure.

### SPECIFIC IMPLEMENTATIONS

To enable those skilled in the art to better understand the solutions of the present disclosure, the technical solutions in the embodiments of the present disclosure will be clearly and completely described below in conjunction with the drawings in the embodiments of the present disclosure. Obviously, the described embodiments are only a part of, not all of, the embodiments of the present disclosure. All other embodiments obtained by those of ordinary skill in the art based on the embodiments of the present disclosure without creative efforts should fall within the protection scope of the present disclosure.

It should be noted that the terms "first", "second", and so on in the description and claims of the present disclosure and in the above drawings are intended to distinguish between similar objects but do not necessarily indicate a specific order or sequence. It should be understood that the data termed in such a way is interchangeable in proper circumstances such that the embodiments of the present disclosure described herein can be implemented in other orders than the order illustrated or described herein. Moreover, the terms "include", "have", and any other variants mean to cover the non-exclusive inclusion, for example, a process, method, system, product, or device that includes a list of steps or units is not necessarily limited to those steps or units which are clearly listed, but may include other steps or units which are not expressly listed or inherent to such a process, method, system, product, or device.

In addition, the terms "mounted", "disposed", "provided with", "connected to", "connected with", and "sleeved" should be construed in a broad sense. For example, "connection" may be a fixed connection, a removable connection, or integration; may be a mechanical connection or an electrical connection; may be a direct connection or an indirect connection implemented by using an intermediate medium; or may be intercommunication between two components, elements or components. Those of ordinary skill in the art may understand specific meanings of the above terms in the present disclosure based on a specific situation.

It should be noted that the embodiments in the present disclosure and features in the embodiments may be combined with each other in a non-conflicting situation. The present disclosure will be described in detail below with reference to the drawings and embodiments.

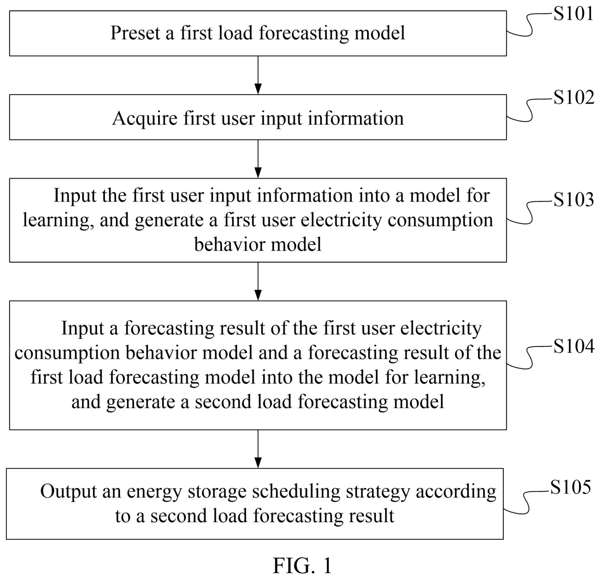

According to an embodiment of the present disclosure, an energy storage operation mode switching method is provided. As shown in FIG. 1, the method includes steps S101 to S106 as follows.

S101. A first load forecasting model is preset.

By presetting the first load model, a load can be forecasted, thereby acquiring basic forecasting information.

According to an embodiment of the present disclosure, preferably, the step that the load forecasting model is preset includes a following process. First data is received, where the first data includes:
a forecasted power of a PV system, forecasted power data of a load, actual sampled power data, daily electricity consumption schedule, meteorological data, forecasted electricity price data, state of charge (SOC) data of an energy storage system, a parameter of each aggregation unit of a power station, and a power distribution network parameter.

By receiving the first data, real-time data acquisition is enabled, thereby providing an accurate data foundation for subsequent processing by other models. Real-time operating data of equipment, such as voltage, current, and temperature, can be acquired by adopting methods including but not limited to sensor detection of equipment data. The detected equipment includes but is not limited to an inverter, an energy storage battery, a PV panel, and a load (refrigerator, washing machine, etc.).

By detecting and acquiring relevant data of the PV system, the load, and the energy storage system, etc., accurate and real-time equipment parameter information is acquired, and the above information can be fed back to a backend for data analysis and processing.

S102. First user input information is acquired.

The actual energy storage usage needs or personal electricity consumption habits, etc. of the first user are acquired via voice, text, and other forms. For example, the first user may input: "I will go out tomorrow, please adjust to the optimal energy storage mode." An application (APP) receives the real-time natural voice input and feeds it back to a processor for information input, thereby enabling an effective real-time information interaction and providing a data foundation for subsequent accurate information correction.

S103. The first user input information is input into a large language model (LLM) for learning, and a first user electricity consumption behavior model is generated.

By processing and analyzing the first user input information through the LLM and generating the first electricity consumption behavior model, accurate user electricity consumption behavior can be obtained, thereby providing a data foundation for subsequent information correction.

S104. A forecasting result of the first user electricity consumption behavior model and a forecasting result of the first load forecasting model are input into the LLM for learning, and a second load forecasting model is generated.

By sending the forecasting result of the first load forecasting model and the forecasting result of the first user electricity consumption behavior model to the LLM for deep learning to generate the second load forecasting model, high accuracy is achieved. The load and the user's electricity consumption habit are combined to generate the high-precision second load forecasting model, thereby flexibly meeting the actual electricity usage needs and enhancing the user's experience.

According to an embodiment of the present disclosure, preferably, the step that the forecasting result of the first user electricity consumption behavior model and the forecasting result of the first load forecasting model are input into the LLM for learning to generate the second load forecasting model includes a following process.

The forecasting result of the first load forecasting model and the forecasting result of the first user electricity consumption behavior model are input into the LLM for learning.

The LLM further performs deep learning through a random forest algorithm based on the forecasting result of the first load forecasting model and the forecasting result of the first user electricity consumption behavior model to generate the second load forecasting model.

By adopting the random forest algorithm, an excellent effect of deep self-learning of the computer can be achieved, which in turn generates the required charging strategy, infers a charging plan suitable for the current or future time period, and further renders the strategy more user-friendly.

S105. Operational data of the PV system is acquired and input into the second load forecasting model to obtain a second load forecasting result, and an energy storage scheduling strategy is output according to the second load forecasting result.

An accurate energy storage scheduling strategy is output, which better aligns with the actual usage scenarios.

According to an embodiment of the present disclosure, preferably, the output energy storage scheduling strategy includes:
a charging pile forecasting strategy, a heat pump forecasting strategy, a battery-life-priority forecasting strategy, a green-power-priority forecasting strategy, an economy-priority forecasting strategy, and an off-grid-priority forecasting strategy.

The output energy storage scheduling strategy includes but is not limited to: the charging pile forecasting strategy, the heat pump forecasting strategy, the battery-life-priority forecasting strategy, the green-power-priority forecasting strategy, the economy-priority forecasting strategy, and the off-grid-priority forecasting strategy. It can achieve flexible use of multiple modes, and other modes can be added according to actual usage needs, thereby achieving diversification of the modes. Meanwhile, mode switching can be performed according to different usage scenarios, so as to adapt to the current application scenario.

According to an embodiment of the present disclosure, preferably, a process of outputting the charging pile forecasting strategy according to the second load forecasting result is as follows.

Data of a generated power of the PV system, the forecasted power of the PV system, a charging power of charging piles, a forecasted power of the charging piles, and the SOC of the energy storage system is acquired.

Charging and discharging management is performed according to a relationship among the generated power of the PV system, the forecasted power of the PV system, the charging power of the charging piles, the forecasted power of the charging piles, and the SOC of the energy storage system.

By detecting the powers of the PV system and the charging piles and performing charging and discharging management according to the SOC of the energy storage system, reasonable allocation of energy storage according to usage conditions can be achieved, thereby improving utilization efficiency.

According to an embodiment of the present disclosure, preferably, the data of the generated power of the PV system, the charging power of the charging piles, and the SOC of the energy storage system is acquired in real time through an energy controller.

The generated power of the PV system is calculated as a total generated power of all PV units in a distribution transformer area.

The charging power of the charging piles is calculated as a total charging power of all charging piles in the distribution transformer area.

The SOC of the energy storage system is calculated as an average value of the SOC of each battery pack in the distribution transformer area.

According to an embodiment of the present disclosure, preferably, when the generated power of the PV system is greater than the charging power of the charging piles and the SOC of the energy storage system is less than a preset value A:
During a peak electricity consumption period, the PV system charges the charging piles and the energy storage system, and charging of the energy storage system is stopped when the SOC of the energy storage system is greater than or equal to the preset value A.

During a flat electricity consumption period or a valley electricity consumption period, the PV system charges the charging piles, the energy storage system is supplemented with an excess of the generated power of the PV system and a power drawn from a power grid, and charging of the energy storage system is stopped when the SOC of the energy storage system is greater than or equal to the preset value A.

Specifically, the data of the generated power of the PV system, the charging power of the charging piles, and the SOC of the energy storage system is acquired in real time through an energy controller. The generated power of the PV system is calculated as a total generated power of all PV units in a distribution transformer area. The charging power of the charging piles is calculated as a total charging power of all charging piles in the distribution transformer area. The SOC of the energy storage system is calculated as an average value of the SOC of each battery pack in the distribution transformer area.
(1) When the generated power of the PV system is greater than the charging power of the charging piles and the SOC of the energy storage system is less than 90%, during a peak electricity consumption period, the PV system charges the charging piles and the energy storage system, and when the SOC of the energy storage system is greater than or equal to 90%, charging of the energy storage system is stopped. During a flat electricity consumption period or a valley electricity consumption period, the PV system charges the charging piles, an excess of the generated power of the PV system and a power drawn from a power grid are supplied to the energy storage system, and when the SOC of the energy storage system is greater than or equal to 90%, charging of the energy storage system is stopped.
(2) When the generated power of the PV system is greater than the charging power of the charging piles and the SOC of the energy storage system is greater than or equal to 90%, the PV system charges the charging piles, and the excess of the generated power of the PV system is fed into the power grid.
(3) When the generated power of the PV system is less than or equal to the charging power of the charging piles and the SOC of the energy storage system is greater than or equal to 20%, during a peak electricity consumption period, the working mode of the energy storage system is set to a discharge mode, and when the SOC of the energy storage system is less than 20%, discharging of the energy storage system is stopped. During a flat electricity consumption period or a valley electricity consumption period, the PV system and the power grid charge the charging piles, the power grid supplements power to the energy storage system, and when the SOC of the energy storage system is greater than or equal to 90%, charging of the energy storage system is stopped.
(4) When the generated power of the PV system is less than or equal to the charging power of the charging piles and the SOC of the energy storage system is less than 20%, the PV system and the power grid jointly charge the charging piles and the energy storage system. During a peak electricity consumption period, the PV system and the power grid charge the charging pile. During a flat electricity consumption period or a valley electricity consumption period, the PV system and the power grid charge the charging piles, the power grid supplements power to the energy storage system, and when the SOC of the energy storage system is greater than or equal to 90%, charging of the energy storage system is stopped.
(5) When the generated power of the PV system is less than the charging power of the charging piles and the SOC of the energy storage system is greater than or equal to 20%, during a peak electricity consumption period, the working mode of the energy storage system is set to a grid-connected discharge mode, and when the generated power of the PV system is greater than the load power in the distribution transformer area or the SOC of the energy storage system is greater than or equal to 20%, discharging of the energy storage system is stopped. During a flat electricity consumption period or a valley electricity consumption period, the power grid supplements power to the energy storage system, and when the SOC of the energy storage system is greater than or equal to 90%, charging of the energy storage system is stopped.
(6) When the generated power of the PV system is less than the charging power of the charging piles and the SOC of the energy storage system is less than 20%, during a peak electricity consumption period, discharging of the energy storage system is stopped. During a flat electricity consumption period or a valley electricity consumption period, the power grid supplements power to the energy storage system, and when the SOC of the energy storage system is greater than or equal to 90%, charging of the energy storage system is stopped.
(7) When the generated power of the PV system is greater than the charging power of the charging piles and the SOC of the energy storage system is less than 90%:
   During a peak electricity consumption period, the working mode of the energy storage system is set to a grid-connected charging mode, and when the SOC of the energy storage system is greater than or equal to 90%, charging of the energy storage system is stopped. During a flat electricity consumption period or a valley electricity consumption period at this time, the working mode of the energy storage system is set to the grid-connected charging mode, and when the SOC of the energy storage system is greater than or equal to 90%, charging of the energy storage system is stopped.
(8) If the load rate of the distribution transformer is greater than 70%, the charging power of the charging piles is read, a command to limit the charging power is sent to the charging piles, and the charging piles perform reduced-load charging. If the load rate of the distribution transformer is less than or equal to 70%, during a peak electricity consumption period, the working mode of the energy storage system is set to the grid-connected discharge mode, and when the SOC of the energy storage system is less than or equal to 20%, discharging of the energy storage system is stopped. During a flat electricity consumption period or a valley electricity consumption period at this time, the working mode of the energy storage system is set to the grid-connected charging mode, and when the SOC of the energy storage system is greater than or equal to 90%, charging of the energy storage system is stopped.

According to an embodiment of the present disclosure, preferably, a process of outputting the heat pump forecasting strategy according to the second load forecasting result is as follows.

Data of a generated power of the PV system, the forecasted power of the PV system, a charging power of a heat pump, a forecasted power of the heat pump, and the SOC of the energy storage system is acquired.

Charging and discharging management is performed according to a relationship among the generated power of the PV system, the forecasted power of the PV system, the charging power of the heat pump, the forecasted power of the heat pump, and the SOC of the energy storage system.

By detecting the powers of the PV system and the heat pump and performing charging and discharging management according to the SOC of the energy storage system, reasonable allocation of energy storage according to usage conditions can be achieved, thereby improving utilization efficiency.

According to an embodiment of the present disclosure, preferably, a process of outputting the battery-life-priority forecasting strategy according to the second load forecasting result is as follows.

Battery operating condition information is acquired, where the battery operating condition information includes current, battery cell, and temperature.

The battery operating condition information is input into a machine learning model, and a battery-life-priority model is generated.

The battery-life-priority forecasting strategy prioritizes battery life, thereby further extending the service life of the battery at the cost of sacrificing certain economy.

According to an embodiment of the present disclosure, preferably, a process of outputting the green-power-priority forecasting strategy according to the second load forecasting result is as follows.

Relevant data of the PV system and the energy storage system are acquired.

The relevant data of the PV system and the energy storage system is input into a model for learning, and a green-power-priority model is generated.

The green-power-priority forecasting strategy enables the exclusive use of PV power, thereby achieving pure green power consumption.

According to an embodiment of the present disclosure, preferably, a process of outputting the economy-priority forecasting strategy according to the second load forecasting result is as follows.

A peak-shaving cost of an energy storage-integrated distributed PV system is calculated, including: an opportunity cost of the distributed PV system, an electricity purchase cost during charging of the energy storage system, and an operation and maintenance cost of the energy storage system.

A peak-shaving revenue of the energy storage-integrated distributed PV system is calculated, including: a peak-shaving compensation revenue and an electric energy revenue of the energy storage system.

A model for analyzing an economic benefit of the energy storage-integrated distributed PV system participating in peak-shaving is constructed, and the economic benefit of the energy storage-integrated distributed PV system participating in peak-shaving is calculated by maximizing an objective function of the model according to a model constraint.

A peak-shaving control strategy is formulated for the energy storage-integrated distributed PV system according to the peak-shaving cost, the peak-shaving revenue, and the economic benefit of the energy storage-integrated distributed PV system participating in peak-shaving.

The economy-priority forecasting strategy ensures a good economic effect.

According to an embodiment of the present disclosure, preferably, a process of outputting the off-grid-priority forecasting strategy according to the second load forecasting result is as follows.

Input information of a second user is received.

The input information of the second user is sent to a model for learning, and an off-grid-priority model is generated.

The backup power capacity is dynamically adjusted according to the user's usage habits, thereby ensuring uninterrupted power supply.

According to an embodiment of the present disclosure, preferably, the first user input information is input via a means including:
voice input, quick response (QR) code scanning, or text input.

A plurality of input options is provided, thereby achieving flexible input.

According to an embodiment of the present disclosure, preferably, the presetting of the first load forecasting model includes a following process.

The first data is input into a neural network model for training to generate the first load forecasting model.

By inputting the first data into an algorithm or model and performing big data processing and computation to generate the first load forecasting model, the presetting of the load forecasting is achieved, thereby enabling load forecasting. The accuracy of the load forecasting model will affect the efficiency of PV-storage operation, so improving the accuracy of the load forecasting model is particularly important. For example, first, the real-time data of the PV system and the load are acquired to obtain their accurate states. When the first user needs to use electricity within a predetermined time in the future, the energy storage system is charged in advance through the PV panels to ensure that the power in the energy storage system is sufficient. This meets the electricity consumption demand of the equipment, and reduces the electricity consumption from the power grid, thereby reducing the electricity cost and ensuring economic efficiency. A higher forecasting accuracy of the load forecasting model enables more accurate identification of the customer's electricity consumption habit, and ensures more precise selection of charging time.

Meanwhile, the acquired first data is input into the neural network model for learning and training to generate the load forecasting model. Therefore, the load only needs to be input into the load forecasting model through methods including but not limited to voice input to obtain a result matching the load.

According to an embodiment of the present disclosure, preferably, the presetting of the first load forecasting model includes a following process.

According to a mapping relationship between the first data and the load, the first load forecasting model is generated.

According to an embodiment of the present disclosure, preferably, the presetting of the first load forecasting model includes a following process.

An entity is extracted from the first data, and a knowledge graph is constructed according to a mapping relationship between the entity and the load to generate the first load forecasting model.

According to an embodiment of the present disclosure, preferably, the PV-storage forecasting strategy includes following content.

According to the forecasted power of the PV system, the forecasted power data of the load, and the actual sampled power data, power or electricity quantity plans for energy storage charging and discharging across different electricity price time periods under various operating scenarios are generated through a preset energy storage operation mode switching method.

Active power regulation is performed on the energy storage system according to the charging and discharging plans.

By acquiring and combining relevant data such as the powers of the PV system, the load, and the energy storage system, and sending the data to the preset energy storage operation mode switching method, energy storage charging and discharging power or electricity quantity plans for different electricity price time periods under various operating scenarios are generated. This can achieve the reasonable allocation of energy storage according to usage conditions, thereby improving utilization efficiency.

Based on the above description, the present disclosure achieves the following technical effects.

In the embodiment of the present disclosure, a human-computer interaction method is adopted to generate the energy storage scheduling strategy. The first load forecasting model is preset. The first user input information is acquired, and input into the model for learning to generate the first user electricity consumption behavior model. The forecasting result of the first user electricity consumption behavior model and the forecasting result of the first load forecasting model are input into the model for learning to generate the second load forecasting model. The energy storage scheduling strategy is output according to the second load forecasting result. In this way, the purposes of convenient information interaction and energy storage scheduling strategy generation are achieved, achieving the technical effect of formulating different system performance maintenance strategies according to customer requirements. This further addresses the technical problems of the prior art. That is, the energy storage modes are limited, failing to offer a variety of application modes for users, thereby making it impossible to perform timely and effective mode switching in response to changes in application scenarios, resulting in suboptimal user experience. Meanwhile, there is a lack of convenient human-computer interaction methods, leading to delays in information interaction.

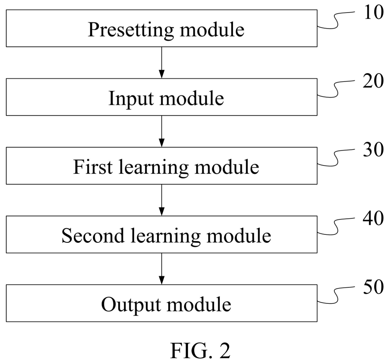

To achieve the above objective, according to another aspect of the present disclosure, an energy storage operation mode switching apparatus is provided. As shown in FIG. 2, the energy storage operation mode switching apparatus includes following modules.

Presetting module 10 is configured to preset a first load forecasting model.

By presetting the first load model, a load can be forecasted, thereby acquiring basic forecasting information.

Input module 20 is configured to acquire first user input information.

The actual energy storage usage needs or personal electricity consumption habits, etc. of the first user are acquired via voice, text, and other forms. For example, the first user may input: "I will go out tomorrow, please adjust to the optimal energy storage mode." An application (APP) receives the real-time natural voice input and feeds it back to a processor for information input, thereby enabling an effective real-time information interaction and providing a data foundation for subsequent accurate information correction.

First learning module 30 is configured to input the first user input information into a model for learning and generate a first user electricity consumption behavior model.

By processing and analyzing the first user input information through the LLM and generating the first electricity consumption behavior model, accurate user electricity consumption behavior can be obtained, thereby providing a data foundation for subsequent information correction.

Second learning module 40 is configured to input a forecasting result of the first user electricity consumption behavior model and a forecasting result of the first load forecasting model into the model for learning and generate a second load forecasting model.

By sending the forecasting result of the first load forecasting model and the forecasting result of the first user electricity consumption behavior model to the LLM for deep learning to generate the second load forecasting model, high accuracy is achieved. The load and the user's electricity consumption habit are combined to generate the high-precision second load forecasting model, thereby flexibly meeting the actual electricity usage needs and enhancing the user's experience.

Output module 50 is configured to output an energy storage scheduling strategy according to the second load forecasting result.

An accurate energy storage scheduling strategy is output, which better aligns with the actual usage scenarios.

Based on the above description, the present disclosure achieves the following technical effects.

In the embodiment of the present disclosure, a human-computer interaction method is adopted to generate the energy storage scheduling strategy. The first load forecasting model is preset. The first user input information is acquired, and input into the model for learning to generate the first user electricity consumption behavior model. The forecasting result of the first user electricity consumption behavior model and the forecasting result of the first load forecasting model are input into the model for learning to generate the second load forecasting model. The energy storage scheduling strategy is output according to the second load forecasting result. In this way, the purposes of convenient information interaction and energy storage scheduling strategy generation are achieved, achieving the technical effect of formulating different system performance maintenance strategies according to customer requirements. This further addresses the technical problems of the prior art. That is, the energy storage modes are limited, failing to offer a variety of application modes for users, thereby making it impossible to perform timely and effective mode switching in response to changes in application scenarios, resulting in suboptimal user experience. Meanwhile, there is a lack of convenient human-computer interaction methods, leading to delays in information interaction.

An embodiment of the present disclosure further provides a computer-readable storage medium. The computer-readable storage medium is configured to store a computer program; and the computer program is configured to run to implement the energy storage operation mode switching method.

In the computer-readable storage medium:
If implemented in form of a software functional unit and sold or used as a stand-alone product, the module integrated in the terminal device may be stored in a computer-readable storage medium. Based on such understanding, the present disclosure can also implement all or part of the processes in the method of the above embodiments by instructing relevant hardware through a computer program. The computer program may be stored in a computer-readable storage medium and, when executed by a processor, may implement each step of displaying and processing memory power consumption optimization.

The computer program may include a computer program code, and the computer program code may be in form of source code, object code, executable file, or in some intermediate forms, etc. The computer-readable medium may include: any physical entity or apparatus capable of carrying computer program code, a recording medium, a universal serial bus (USB) disc, a mobile hard disc drive, a magnetic disc, an optical disc, a computer memory, a read-only memory (ROM), a random access memory (RAM), an electrical carrier signal, a telecommunications signal, a software distribution medium, etc. It should be noted that the content included in computer-readable medium may be appropriately added or reduced according to legislative and patent practice requirements within a jurisdiction. For example, in some jurisdictions, based on legislation and patent practice, the computer-readable medium does not include electrical carrier signals or telecommunication signals.

An embodiment of the present disclosure further provides an electronic device, configured to store the energy storage operation mode switching method. The electronic device includes: a memory and a processor, where the memory is configured to store a computer program; and the processor is configured to run the computer program so as to implement the energy storage operation mode switching method.

Evidently, those skilled in the art should understand that each module or step of the present disclosure described above may be implemented by a general-purpose computing apparatus. They may be centralized on a single computing apparatus or distributed across a network composed of multiple computing apparatuses. Alternatively, they may be implemented using program code executable by a computing apparatus, thereby allowing them to be stored in a storage apparatus for execution by the computing apparatus. Alternatively, they may be fabricated into individual integrated circuit modules, or a plurality of modules or steps may be fabricated into a single integrated circuit module for implementation. As a consequence, the present disclosure is not limited to any specific hardware and software combination.

The preferred implementations of the present disclosure are described above in detail with reference to the drawings, but the present disclosure is not limited to the specific details in the above implementations. Various equivalent variations can be made to the technical solutions of the present disclosure without departing from the technical ideas of the present disclosure, but such equivalent variations should fall within the protection scope of the present disclosure.

## Claims

1. An energy storage operation mode switching method, comprising:
S101: presetting a first load forecasting model: receiving first data, wherein the first data comprises a forecasted power of a photovoltaic (PV) system, forecasted power data of a load, actual sampled power data, daily electricity consumption schedule, meteorological data, forecasted electricity price data, state of charge (SOC) data of an energy storage system, a parameter of each aggregation unit of a power station, and a power distribution network parameter; inputting the first data into a neural network model for training to generate the first load forecasting model; and alternatively, extracting an entity from the first data, and constructing a knowledge graph according to a mapping relationship between the entity and the load to generate the first load forecasting model;
S102: acquiring first user input information, wherein the first user input information is input via a means comprising voice input, quick response (QR) code scanning, or text input;
S103: inputting the first user input information into a large language model (LLM) for learning, and generating a first user electricity consumption behavior model;
S104: inputting a forecasting result of the first user electricity consumption behavior model and a forecasting result of the first load forecasting model into the LLM for learning, and generating a second load forecasting model; and
S105: acquiring operational data of the PV system, inputting the operational data into the second load forecasting model to obtain a second load forecasting result, and outputting an energy storage scheduling strategy according to the second load forecasting result.

2. The energy storage operation mode switching method according to claim 1, wherein the energy storage scheduling strategy comprises:
a charging pile forecasting strategy, a heat pump forecasting strategy, an economy-priority forecasting strategy, and an off-grid-priority forecasting strategy.

3. The energy storage operation mode switching method according to claim 2, wherein a process of outputting the charging pile forecasting strategy according to the second load forecasting result comprises:
acquiring data of a generated power of the PV system, the forecasted power of the PV system, a charging power of charging piles, a forecasted power of the charging piles, and the SOC of the energy storage system;
performing charging and discharging management according to a relationship among the generated power of the PV system, the forecasted power of the PV system, the charging power of the charging piles, the forecasted power of the charging piles, and the SOC of the energy storage system; and
when the generated power of the PV system is greater than the charging power of the charging piles and the SOC of the energy storage system is less than a preset value A:
charging, by the PV system, the charging piles and the energy storage system during a peak electricity consumption period, and stopping charging of the energy storage system when the SOC of the energy storage system is greater than or equal to the preset value A; and
charging, by the PV system, the charging piles during a flat electricity consumption period or a valley electricity consumption period, supplementing the energy storage system with an excess of the generated power of the PV system and a power drawn from a power grid, and stopping charging of the energy storage system when the SOC of the energy storage system is greater than or equal to the preset value A.

4. The energy storage operation mode switching method according to claim 3, wherein the data of the generated power of the PV system, the charging power of the charging piles, and the SOC of the energy storage system is acquired in real time through an energy controller; the generated power of the PV system is calculated as a total generated power of all PV units in a distribution transformer area; the charging power of the charging piles is calculated as a total charging power of all charging piles in the distribution transformer area; and the SOC of the energy storage system is calculated as an average value of the SOC of each battery pack in the distribution transformer area.

5. The energy storage operation mode switching method according to claim 2, wherein a process of outputting the heat pump forecasting strategy according to the second load forecasting result comprises:
acquiring data of a generated power of the PV system, the forecasted power of the PV system, a charging power of a heat pump, a forecasted power of the heat pump, and the SOC of the energy storage system; and performing charging and discharging management according to a relationship among the generated power of the PV system, the forecasted power of the PV system, the charging power of the heat pump, the forecasted power of the heat pump, and the SOC of the energy storage system.

6. The energy storage operation mode switching method according to claim 2, wherein a process of outputting the economy-priority forecasting strategy according to the second load forecasting result comprises:
calculating a peak-shaving cost of an energy storage-integrated distributed PV system, comprising: an opportunity cost of the distributed PV system, an electricity purchase cost during charging of the energy storage system, and an operation and maintenance cost of the energy storage system;
calculating a peak-shaving revenue of the energy storage-integrated distributed PV system, comprising: a peak-shaving compensation revenue and an electric energy revenue of the energy storage system;
constructing a model for analyzing an economic benefit of the energy storage-integrated distributed PV system participating in peak-shaving, and calculating the economic benefit of the energy storage-integrated distributed PV system participating in peak-shaving by maximizing an objective function of the model according to a model constraint; and
formulating a peak-shaving control strategy for the energy storage-integrated distributed PV system according to the peak-shaving cost, the peak-shaving revenue, and the economic benefit of the energy storage-integrated distributed PV system participating in peak-shaving.

7. An energy storage operation mode switching apparatus, comprising:
a presetting module, configured to preset a first load forecasting model;
an input module, configured to acquire first user input information;
a first learning module, configured to input the first user input information into a LLM for learning and generate a first user electricity consumption behavior model;
a second learning module, configured to input a forecasting result of the first user electricity consumption behavior model and a forecasting result of the first load forecasting model into the LLM for learning and generate a second load forecasting model; and
an output module, configured to acquire operational data of a PV system, input the operational data into the second load forecasting model to obtain a second load forecasting result, and output an energy storage scheduling strategy according to the second load forecasting result.

8. The energy storage operation mode switching apparatus according to claim 7, wherein the energy storage scheduling strategy comprises:
a charging pile forecasting strategy, a heat pump forecasting strategy, an economy-priority forecasting strategy, and an off-grid-priority forecasting strategy.

9. The energy storage operation mode switching method according to claim 8, wherein a process of outputting the charging pile forecasting strategy according to the second load forecasting result comprises:
acquiring data of a generated power of the PV system, the forecasted power of the PV system, a charging power of charging piles, a forecasted power of the charging piles, and the SOC of the energy storage system;
performing charging and discharging management according to a relationship among the generated power of the PV system, the forecasted power of the PV system, the charging power of the charging piles, the forecasted power of the charging piles, and the SOC of the energy storage system; and
when the generated power of the PV system is greater than the charging power of the charging piles and the SOC of the energy storage system is less than a preset value A:
charging, by the PV system, the charging piles and the energy storage system during a peak electricity consumption period, and stopping charging of the energy storage system when the SOC of the energy storage system is greater than or equal to the preset value A; and
charging, by the PV system, the charging piles during a flat electricity consumption period or a valley electricity consumption period, supplementing the energy storage system with an excess of the generated power of the PV system and a power drawn from a power grid, and stopping charging of the energy storage system when the SOC of the energy storage system is greater than or equal to the preset value A.

10. The energy storage operation mode switching method according to claim 8, wherein the data of the generated power of the PV system, the charging power of the charging piles, and the SOC of the energy storage system is acquired in real time through an energy controller; the generated power of the PV system is calculated as a total generated power of all PV units in a distribution transformer area; the charging power of the charging piles is calculated as a total charging power of all charging piles in the distribution transformer area; and the SOC of the energy storage system is calculated as an average value of the SOC of each battery pack in the distribution transformer area.

11. The energy storage operation mode switching method according to claim 8, wherein a process of outputting the heat pump forecasting strategy according to the second load forecasting result comprises:
acquiring data of a generated power of the PV system, the forecasted power of the PV system, a charging power of a heat pump, a forecasted power of the heat pump, and the SOC of the energy storage system; and performing charging and discharging management according to a relationship among the generated power of the PV system, the forecasted power of the PV system, the charging power of the heat pump, the forecasted power of the heat pump, and the SOC of the energy storage system.

12. The energy storage operation mode switching method according to claim 8, wherein a process of outputting the economy-priority forecasting strategy according to the second load forecasting result comprises:
calculating a peak-shaving cost of an energy storage-integrated distributed PV system, comprising: an opportunity cost of the distributed PV system, an electricity purchase cost during charging of the energy storage system, and an operation and maintenance cost of the energy storage system;
calculating a peak-shaving revenue of the energy storage-integrated distributed PV system, comprising: a peak-shaving compensation revenue and an electric energy revenue of the energy storage system;
constructing a model for analyzing an economic benefit of the energy storage-integrated distributed PV system participating in peak-shaving, and calculating the economic benefit of the energy storage-integrated distributed PV system participating in peak-shaving by maximizing an objective function of the model according to a model constraint; and
formulating a peak-shaving control strategy for the energy storage-integrated distributed PV system according to the peak-shaving cost, the peak-shaving revenue, and the economic benefit of the energy storage-integrated distributed PV system participating in peak-shaving.

13. A computer-readable storage medium, wherein the computer-readable storage medium is configured to store a computer program; and the computer program is configured to run to implement the energy storage operation mode switching method according to any one of claims 1 to 6.

14. An electronic device, comprising: a memory and a processor, wherein the memory is configured to store a computer program; and the processor is configured to run the computer program so as to implement the energy storage operation mode switching method according to any one of claims 1 to 6.
